# FASCICULE DE BREVET EUROPEEN

(11) **EP 2 131 944 B1**
(45) Date de publication et mention de la délivrance du brevet: **27.12.2017**
(21) Numéro de dépôt: 08761783.3
(22) Date de dépôt: 18.01.2008
(51) Int. Cl.: B01D 53/14, C10L 3/10

(54) **PROCÉDÉ ET INSTALLATION DE PURIFICATION D'UN MÉLANGE GAZEUX CONTENANT DES GAZ ACIDES**
VERFAHREN UND ANLAGE ZUR REINIGUNG EINER SÄURE GASE-ENTHALTENDEN GASMISCHUNG
METHOD AND PLANT FOR PURIFYING A GASEOUS MIXTURE CONTAINING ACIDIC GASES

(30) Priorité: 19.01.2007 FR 0700361
(43) Date de publication de la demande: 16.12.2009
(73) Titulaire: Total S.A., 92400 Courbevoie (FR)
(72) Inventeur: HOANG-DINH, Viep, F-64320 Bizanos (FR); ROQUET, Damien, 64000 PAU (FR); HABCHI-TOUNSI, Kenza, F-92500 Rueil Malmaison (FR); CHAZELAS, Olivier, F-91230 Montgeron (FR); WEISS, Claire, F-92150 Suresnes (FR)
(74) Mandataire: Hirsch & Associés
(86) Numéro de dépôt international: PCT/FR2008/000065
(87) Numéro de publication internationale: WO 2008/107550

(56) Documents cités:
- WO-A1-2004/080573
- FR-A- 2 573 671
- FR-A1- 2 589 752
- US-A- 4 551 158
- US-A- 4 780 115
- US-A- 4 834 781
- US-A1- 2006 196 357

## Description

### DOMAINE DE L'INVENTION

La présente invention concerne un procédé de purification d'un mélange gazeux (en particulier un mélange gazeux à base d'hydrocarbures tel que du gaz naturel) contenant des gaz acides, ainsi qu'une installation adaptée à la mise en oeuvre de ce procédé.

### ARRIERE-PLAN TECHNIQUE

Dans le cadre de la production de gaz naturel (contenant principalement du méthane) ou de gaz naturel liquéfié, il est nécessaire de purifier ledit gaz naturel issu d'un gisement d'un certain nombre de contaminants, au premier rang desquels ce que l'on appelle les « gaz acides », c'est-à-dire principalement le dioxyde de carbone (CO₂) et le sulfure d'hydrogène (H₂S) mais également les mercaptans (R-SH), le sulfure de carbonyle (COS) et le disulfure de carbone (CS₂).

Le dioxyde de carbone et le sulfure d'hydrogène peuvent représenter une part importante du mélange gazeux issu d'un gisement de gaz naturel, typiquement de 3 à 70 % (en concentration molaire), les autres gaz acides étant présents en quantités plus faibles.

De nombreux procédés existent actuellement pour désacidifier le gaz naturel.

Une première classe de procédés est celle des procédés d'absorption physique, dans lesquels les gaz acides sont mis en contact avec une solution absorbante, le transfert des gaz acides dans la solution absorbante étant effectué par affinité, c'est-à-dire étant promu par l'équilibre thermodynamique. Des exemples de composés pouvant former de telles solutions absorbantes appropriées sont le diméthyléther de polyéthylène glycol (procédé « Selexol » de UOP), le propylène carbonate (procédé de Fluor Corporation), la N-méthyl-pyrrolidone (procédé « Purisol » de Lurgi), le méthanol (procédé « Rectisol » de Lurgi) ou des dérivés de morpholine (procédé « Morphisorb » de UHDE). La régénération de la solution absorbante s'effectue par détentes successives à des pressions décroissantes, sans fourniture d'énergie.

Une deuxième classe de procédés est celle des procédés d'absorption chimique dans lesquels les gaz acides sont mis en contact avec une solution absorbante, le transfert des gaz acides dans la solution absorbante étant effectué ou accéléré par une réaction chimique. Des exemples de composés pouvant former de telles solutions absorbantes appropriées sont le carbonate de potassium (procédé « Benfield » de UOP) et surtout les alcanolamines : notamment monoéthanolamine (MEA), diglycolamine (DGA), diisopropanolamine (DIPA), diéthanolamine (DEA), méthyldiéthanolamine (MDEA), méthyldiéthanolamine activée et triéthanolamine (TEA), ainsi que les amines stériquement encombrées. La régénération de la solution absorbante s'effectue principalement dans une colonne de régénération chauffée.

On peut également mentionner une classe de procédés mixtes, d'absorption physico-chimique, comme par exemple le procédé dit « Sulfinol » de Shell, dans lequel la solution absorbante est un mélange de sulfolane, d'eau et d'une amine.

Les procédés d'absorption physique présentent l'inconvénient d'être coûteux, peu répandus, de faible efficacité lorsque la pression partielle des gaz acides est peu importante et ils présentent également l'inconvénient d'absorber aussi une partie des hydrocarbures.

Par ailleurs les procédés d'absorption chimique ou physico-chimique présentent l'inconvénient de nécessiter un apport d'énergie important au stade de la régénération de la solution absorbante.

Classiquement, les gaz acides alimentent une unité Claus où l'H₂S est converti en soufre mais où le CO₂ associé est relâché à l'atmosphère (voir par exemple FR2589752). Il existe donc un réel besoin d'un procédé de purification de mélange gazeux contenant des gaz acides qui, d'une part, permette de produire le flux CO₂ séparément du flux H₂S, et d'autre part, soit à la fois aussi efficace et plus économe en énergie et en débit de solvant par rapport aux procédés existants.

### RESUME DE L'INVENTION

L'invention a en premier lieu pour objet un procédé de traitement d'un mélange gazeux contenant des gaz acides, comprenant :
- une mise en contact du mélange gazeux avec une solution absorbante, permettant d'obtenir un mélange gazeux désacidifié et une solution absorbante chargée en gaz acides ; et
- une régénération de la solution absorbante chargée en gaz acides ;
dans lequel la régénération comprend les étapes suivantes :
- passage de la solution absorbante dans un premier régénérateur à une première pression ; puis
- passage de la solution absorbante dans un deuxième régénérateur à une deuxième pression, inférieure à la première pression ; et
- compression des gaz issus du deuxième régénérateur et recyclage des gaz ainsi compressés vers le premier régénérateur.

La régénération comprend en outre les étapes suivantes :
- à la suite du passage dans le deuxième régénérateur, passage de la solution absorbante dans un troisième régénérateur à une troisième pression inférieure à la deuxième pression ; et
- compression des gaz issus du troisième régénérateur et recyclage des gaz ainsi compressés vers le deuxième régénérateur.
Au moins une partie des gaz issus du deuxième et / ou du troisième régénérateur est prélevée pour fournir un mélange gazeux riche en sulfure d'hydrogène et au moins une partie des gaz issus du premier régénérateur est prélevée pour fournir un mélange gazeux riche en dioxyde de carbone. En outre, le mélange gazeux riche en dioxyde de carbone est mis en contact avec au moins une partie de la solution absorbante issue du deuxième ou du troisième régénérateur, afin de fournir un mélange gazeux très riche en dioxyde de carbone, la solution absorbante obtenue à l'issue de cette mise en contact subissant ensuite la régénération ou étant refroidie et mise en contact avec le mélange gazeux. Selon un mode de réalisation, la première pression est comprise entre 5 et 20 bar effectif, la deuxième pression est comprise entre 2 et 6 bar effectif, et la troisième pression est comprise entre 0,5 et 1,5 bar effectif.

Selon un mode de réalisation le premier et / ou le deuxième et / ou le troisième régénérateur, s'il est présent, sont chauffés.

Selon un mode de réalisation, la solution absorbante n'est pas à ébullition dans le premier régénérateur et le deuxième régénérateur et est à ébullition dans le troisième régénérateur.

Selon un mode de réalisation, au cours de l'étape de mise en contact du mélange gazeux avec la solution absorbante, une partie de la solution absorbante est prélevée, refroidie, et remise en contact avec le mélange gazeux.

Selon un mode de réalisation, la solution absorbante subit une détente flash avant le passage dans le premier régénérateur.

Selon un mode de réalisation, une partie de la solution absorbante obtenue à l'issue de la détente flash et / ou une partie de la solution absorbante obtenue à l'issue du passage dans le premier régénérateur et / ou une partie de la solution absorbante obtenue à l'issue du passage dans le deuxième régénérateur est refroidie et mise en contact avec le mélange gazeux.

Selon un mode de réalisation, le mélange gazeux est à base d'hydrocarbures, et de préférence est du gaz naturel.

Selon un mode de réalisation, la solution absorbante comprend :
- au moins une alcanolamine, de préférence choisie parmi le groupe constitué de la diéthanolamine, de la méthyldiéthanolamine et de la méthyldiéthanolamine activée ;
- éventuellement un thioalcanol en C₂-C₄, de préférence le thiodiglycol ; et
- de l'eau

Selon un mode de réalisation, la solution absorbante comprend :
- au moins une alcanolamine, de préférence choisie parmi le groupe constitué de la diisopropanolamine et de la méthyldiéthanolamine ;
- éventuellement du sulfolane ; et
- de l'eau

Selon un mode de réalisation, le procédé comprend en outre l'étape suivante :
- déshydratation du mélange gazeux désacidifié.

L'invention a également pour objet une installation de traitement d'un mélange gazeux contenant des gaz acides, comprenant :
- une colonne d'absorption ;
- une conduite d'amenée de mélange gazeux alimentant le pied de la colonne d'absorption ;
- une conduite d'amenée de solution absorbante, alimentant la tête de la colonne d'absorption ;
- un premier régénérateur dont une entrée est reliée à une sortie en pied de la colonne d'absorption via une conduite de soutirage de solution absorbante riche ;
- un deuxième régénérateur ;
- une conduite de transport liquide du premier régénérateur vers le deuxième régénérateur ;
- une conduite de transport gazeux du deuxième régénérateur vers le premier régénérateur ;
- un compresseur situé sur la conduite de transport gazeux du deuxième régénérateur vers le premier régénérateur.

L'installation susmentionnée comprend en outre :
- un troisième régénérateur ;
- une conduite de transport liquide du deuxième régénérateur vers le troisième régénérateur ;
- une conduite de transport gazeux du troisième régénérateur vers le deuxième régénérateur ;
- un compresseur situé sur la conduite de transport gazeux du troisième régénérateur vers le deuxième régénérateur.
En outre, l'installation susmentionnée comprend : une conduite de soutirage de mélange gazeux riche en sulfure d'hydrogène, branchée en sortie du deuxième régénérateur et / ou du troisième régénérateur ; et une conduite de soutirage de mélange gazeux riche en dioxyde de carbone, branchée en sortie du premier régénérateur ; une colonne d'absorption supplémentaire, alimentée en pied par la conduite de soutirage de mélange gazeux riche en dioxyde de carbone ; une conduite d'amenée de solution absorbante supplémentaire alimentant en tête la colonne d'absorption supplémentaire ; une conduite de soutirage de mélange gazeux très riche en dioxyde de carbone, branchée en sortie en tête de la colonne d'absorption supplémentaire ; et une conduite de soutirage de solution absorbante branchée en sortie en pied de la colonne d'absorption supplémentaire et alimentant éventuellement le premier régénérateur ; ou une conduite de déviation de solution absorbante alimentée par une première déviation, une deuxième déviation, une troisième déviation, une quatrième déviation ou plusieurs de celles-ci, chaque déviation étant dotée de moyens de refroidissement et de pompes, un ballon de détente flash alimenté par la conduite de soutirage de solution absorbante riche étant disposé entre la colonne d'absorption et le premier régénérateur, dans laquelle : la première déviation est branchée en sortie du ballon de détente flash ; la deuxième déviation est branchée en sortie du premier régénérateur ; la troisième déviation est branchée en sortie du deuxième régénérateur ; et la quatrième déviation est branchée en sortie de la colonne d'absorption supplémentaire.

Selon un mode de réalisation, l'installation susmentionnée comprend un ou plusieurs des éléments suivants :
- un détendeur situé sur la conduite de soutirage de solution absorbante riche ;
- des moyens de refroidissement et une pompe situés sur la conduite d'amenée de solution absorbante ;
- un détendeur situé sur la conduite de transport liquide du premier régénérateur vers le deuxième régénérateur ;
- un détendeur situé sur la conduite de transport liquide du deuxième régénérateur vers le troisième régénérateur.

Selon un mode de réalisation de l'installation susmentionnée, le premier régénérateur et / ou le deuxième régénérateur et / ou le troisième régénérateur sont pourvus de moyens de chauffage.

Selon un mode de réalisation, l'installation susmentionnée comprend :
- des moyens de refroidissement ;
- une conduite de prélèvement de solution absorbante branchée sur la colonne d'absorption et alimentant les moyens de refroidissement ;
- une conduite d'injection de solution absorbante refroidie, branchée en sortie des moyens de refroidissement et alimentant la colonne d'absorption.

Selon un mode de réalisation, l'installation susmentionnée comprend entre la colonne d'absorption et le premier régénérateur :
- un ballon de détente flash.

L'invention a également pour objet un procédé de production de gaz naturel liquéfié comprenant :
- une étape de traitement d'un gaz naturel contenant des gaz acides, selon le procédé susmentionné ; et
- une étape de liquéfaction du gaz naturel traité.

La présente invention permet de surmonter les inconvénients de l'état de la technique. Elle fournit plus particulièrement un procédé de purification de mélange gazeux (en particulier de gaz naturel) contenant des gaz acides qui soit à la fois aussi efficace et moins coûteux en énergie par rapport aux procédés existants.

Ceci est principalement accompli grâce à la mise au point d'une régénération étagée de la solution absorbante, la régénération s'effectuant dans trois (voire plus) régénérateurs successifs à pression décroissante, les gaz issus de chaque régénérateur étant recomprimés et réinjectés dans le régénérateur situé immédiatement en amont. Cette réinjection en amont de gaz recomprimés permet de fournir une partie de l'énergie nécessaire à la régénération et d'effectuer des économies sur le chauffage des régénérateurs. L'économie globale d'énergie réalisée par rapport à une régénération classique est de l'ordre de 10 %.

Selon certains modes de réalisation particuliers, l'invention présente également les caractéristiques avantageuses énumérées ci-dessous.
- Une partie des gaz acides issus de la régénération (par exemple les gaz acides issus du premier régénérateur) est directement disponible à pression élevée. Ainsi, on peut procéder si on le souhaite à une réinjection des gaz acides dans le gisement, à haute pression, en réalisant des économies au niveau de la recompression des gaz acides.
- La régénération étagée entraîne un enrichissement progressif des gaz acides en H₂S. On peut ainsi effectuer une séparation sélective des gaz acides. Les gaz acides récupérés en sortie du ou des régénérateurs situés en aval sont riches en H₂S, tandis que gaz acides récupérés en sortie du ou des régénérateurs situés en amont sont riches en CO₂. Cette séparation sélective est avantageuse si l'on souhaite traiter spécifiquement le sulfure d'hydrogène, puisque le coût de traitement est diminué en l'absence de « contamination » importante du sulfure d'hydrogène par du dioxyde de carbone. On réalise d'ailleurs à ce niveau également un gain en terme d'absence de « contamination » par des hydrocarbures.
- Il est possible de produire un flux CO₂ concentré valorisable, par exemple, pour la réinjection pour la production assistée d'huile.
- La régénération étagée selon l'invention permet de se passer d'un régénérateur à basse pression de grande taille qui est nécessaire dans la régénération classique de solutions absorbantes chimiques. Ce gain peut être particulièrement significatif pour les applications off-shore.
- Le procédé selon l'invention se prête à un réglage optimal de la régénération permettant de limiter le plus possible le débit de solution absorbante.

### BREVE DESCRIPTION DES FIGURES

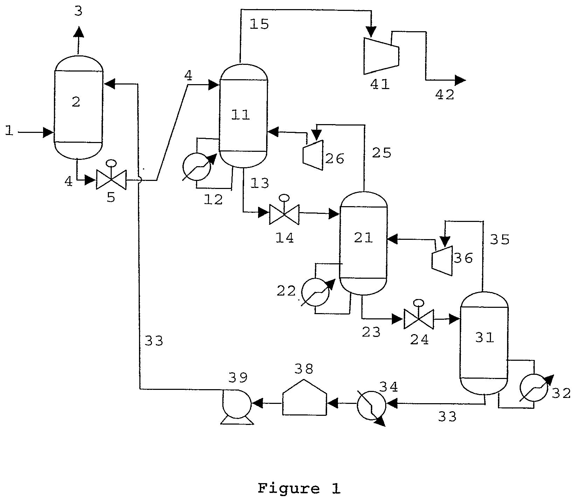

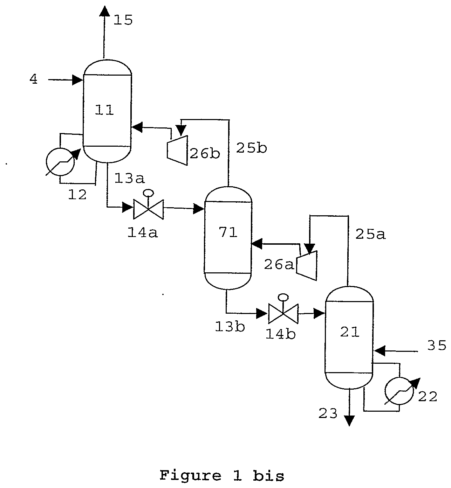

La **figure 1** représente de manière schématique un mode de réalisation d'une installation, qui n'est pas revendiqué.
La **figure 1** **bis** représente un détail de l'installation, selon un mode de réalisation particulier, qui n'est pas revendiqué.
La **figure 2** représente de manière schématique un mode de réalisation d'une installation selon l'invention.
La **figure 3** représente de manière schématique un autre mode de réalisation d'une installation selon l'invention.

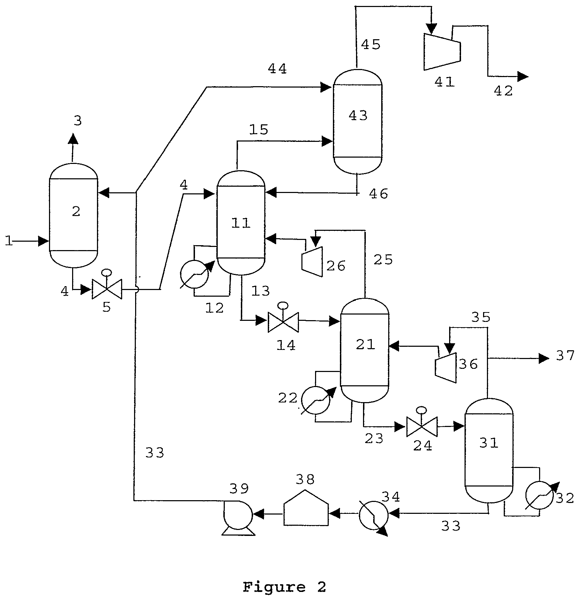

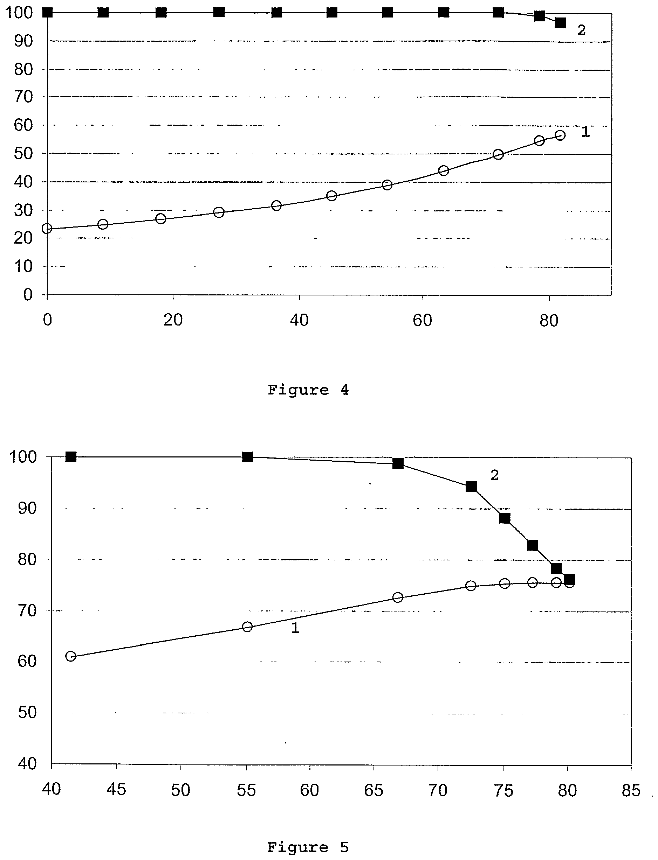

Les **figures 4 à 8** sont des diagrammes représentant la pureté de la fraction riche en CO₂ prélevée en sortie du premier régénérateur (courbe 1) et de la fraction riche en H₂S prélevée en sortie du troisième régénérateur (courbe 2) en fonction de l'importance du prélèvement réalisé en sortie du troisième régénérateur, dans le cas du mode de réalisation de la **figure 2** mais en l'absence de la colonne d'absorption 43. En abscisse figure le pourcentage de H₂S prélevé *via* la conduite de soutirage 37, par rapport à la quantité totale de H₂S présent dans le système ; en ordonnée figure la proportion volumique en CO₂ (respectivement en H₂S) dans la fraction riche en CO₂ issue de la conduite de soutirage 15 (respectivement dans la fraction riche en H₂S issue de la conduite de soutirage 37).
La **figure 4** correspond à un rapport de concentrations volumiques CO₂ / H₂S en entrée du système égal à 0,5.
La **figure 5** correspond à un rapport de concentrations volumiques CO₂ / H₂S en entrée du système égal à 1.

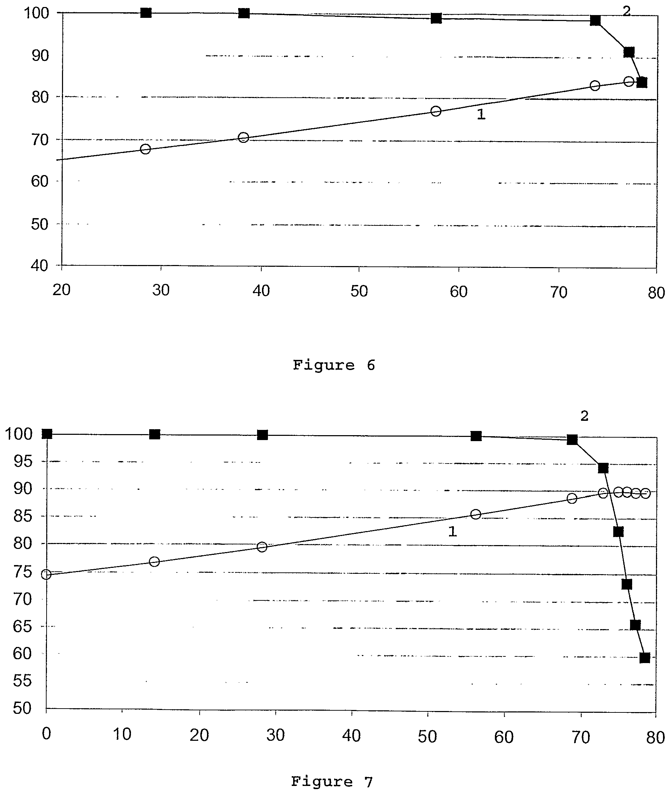

La **figure 6** correspond à un rapport de concentrations volumiques CO₂ / H₂S en entrée du système égal à 3.
La **figure 7** correspond à un rapport de concentrations volumiques CO₂ / H₂S en entrée du système égal à 5.

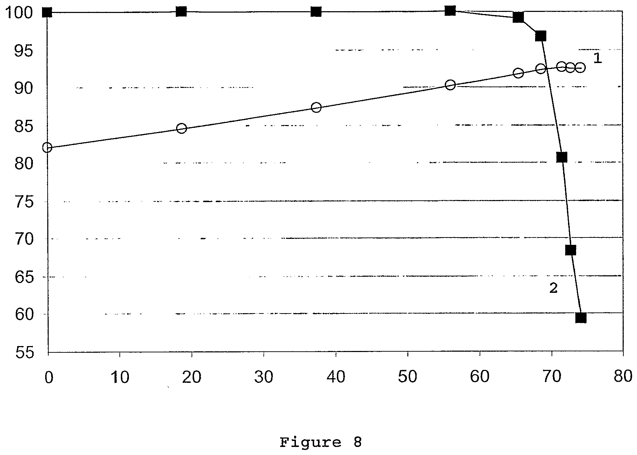

La **figure 8** correspond à un rapport de concentrations volumiques CO₂ / H₂S en entrée du système égal à 8.

### DESCRIPTION DE MODES DE REALISATION DE L'INVENTION

L'invention est maintenant décrite plus en détail et de façon non limitative dans la description qui suit.

### Installation de traitement de gaz

En faisant référence à la **figure 1****,** une installation de traitement de gaz selon l'invention comprend principalement une colonne d'absorption 2, et au moins trois régénérateurs, à savoir dans le cas présent un premier régénérateur 11 (ou régénérateur haute pression), un deuxième régénérateur 21 (ou régénérateur moyenne pression) et un troisième régénérateur 31 (ou régénérateur basse pression).

La colonne d'absorption 2 peut être une colonne usuelle dans le domaine, notamment une colonne à plateaux ou une colonne à garnissage. L'installation peut également comprendre deux colonnes d'absorption ou plus.

Chaque régénérateur est un contacteur. Il peut consister en un simple récipient doté de moyens de pulvérisation de solution absorbante ou, de manière préférée, en une colonne à plateaux (ou une colonne à garnissage). A titre d'exemple le premier régénérateur et le deuxième régénérateur peuvent comporter de 4 à 6 voire 10 plateaux, et le troisième régénérateur comporter de 10 à 15 voire 20 plateaux.

La colonne d'absorption 2 est alimentée en pied par une conduite d'amenée de mélange gazeux 1. Une conduite de soutirage de gaz traité 3 est connectée en sortie en tête de la colonne d'absorption 2. Elle peut alimenter des moyens de traitement complémentaire (notamment des moyens de déshydratation) ou stockage ou transport du gaz, qui ne sont pas représentés ici.

Tous les éléments décrits ici, à l'exception de la colonne d'absorption 2, de la conduite d'amenée de mélange gazeux 1 et de la conduite de soutirage de gaz traité 3, font partie du circuit de régénération de la solution absorbante (et de traitement des gaz acides).

En tête de la colonne d'absorption est branchée, en entrée, une conduite d'amenée de solution absorbante 33. Une conduite de soutirage de solution absorbante riche 4 est connectée en sortie en pied de la colonne d'absorption 2.

Cette conduite de soutirage de solution absorbante riche 4 alimente en tête le premier régénérateur 11. Sur cette conduite de soutirage de solution absorbante riche 4 est prévu un détendeur 5 (ou à la place de celui-ci un ensemble constitué d'une turbine et d'un détendeur en parallèle). Le premier régénérateur 11 est muni d'un moyen de chauffage 12. En tête du premier régénérateur 11 est connectée, en sortie, une conduite de soutirage de gaz acides 15, encore appelée dans certains modes de réalisation conduite de soutirage de mélange gazeux riche en dioxyde de carbone. En pied du premier régénérateur 11 est connectée, en sortie, une conduite de transport liquide 13 du premier régénérateur 11 vers le deuxième régénérateur 21, qui est ainsi alimenté en tête. Sur cette conduite de transport liquide 13 est prévu de préférence un détendeur 14.

Le deuxième régénérateur 21 est également muni d'un moyen de chauffage 22. En tête du deuxième régénérateur 21 est connectée, en sortie, une conduite de transport gazeux 25 du deuxième régénérateur 21 vers le premier régénérateur 11. Sur ladite conduite de transport gazeux 25 est prévu un compresseur 26. En pied du deuxième régénérateur 21 est connectée, en sortie, une conduite de transport liquide 23 du deuxième régénérateur 21 vers le troisième régénérateur 31, qui est ainsi alimenté en tête. Sur cette conduite de transport liquide 23 est prévu de préférence un détendeur 24.

Le troisième régénérateur 31 est également muni d'un moyen de chauffage 32 (ici un rebouilleur). En tête du troisième régénérateur 31 est connectée, en sortie, une conduite de transport gazeux 35 du troisième régénérateur 31 vers le deuxième régénérateur 21. Sur ladite conduite de transport gazeux 35 est prévu un compresseur 36. En pied du troisième régénérateur 31 est connectée, en sortie, la conduite d'amenée de solution absorbante 33 susmentionnée.

Le long de la conduite d'amenée de solution absorbante 33 sont de préférence prévus, successivement : des moyens de refroidissement 34, un bac de stockage 38 (optionnel) et une pompe 39. Les moyens de refroidissement 34 comprennent de préférence un échangeur de chaleur avec un milieu externe de type eau, air ou eau de mer, et éventuellement, en amont de cet échangeur, un échangeur de chaleur avec la solution absorbante (l'échange de chaleur s'effectuant par exemple avec le liquide circulant dans la conduite de soutirage de solution absorbante riche 4), à des fins d'optimisation énergétique. La pompe 39 peut être remplacée par un ensemble de deux ou plusieurs pompes placées en série.

Quant à la conduite de soutirage de gaz acides 15, elle peut être refroidie et alimenter des moyens aval de compression 41, en sortie desquels est branchée une conduite de soutirage de gaz acides comprimés 42. Celle-ci peut être refroidie et alimenter des moyens de traitement complémentaire, des moyens de réinjection en puits, ou autre.

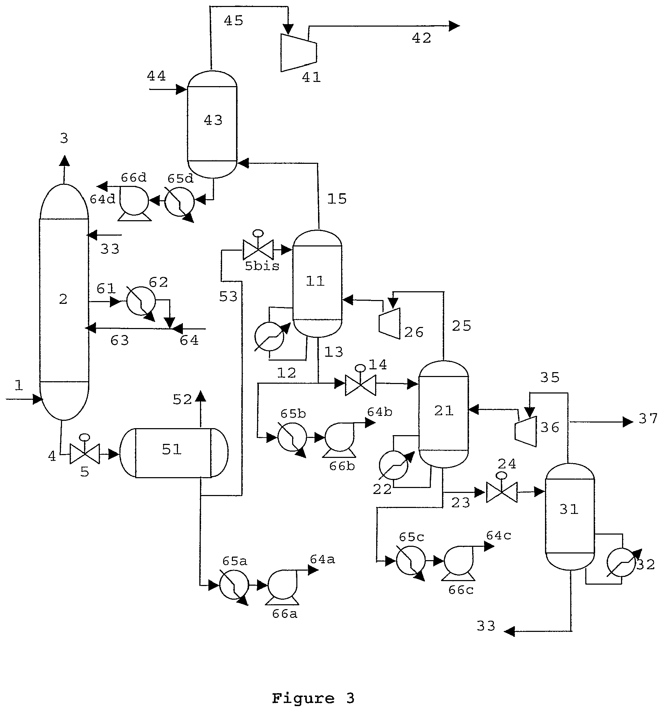

Parmi les modifications qui peuvent être apportées à cette installation sans sortir du cadre de l'invention, on peut notamment énumérer les variantes suivantes.
- Il est possible de se dispenser d'un ou plusieurs des moyens de chauffage 12, 22, 32 associés aux régénérateurs 11, 21, 31 ; il s'agit là toutefois en général d'une version dégradée de l'installation.
- Il est possible de prévoir que les compresseurs 26, 36 situés sur les conduites de transport gazeux 25, 35 soient munis d'un refroidisseur en entrée, si cela est nécessaire à leur bon fonctionnement ; il est également possible de dédoubler chaque compresseur 26, 36 en deux compresseurs successifs, avec un moyen de refroidissement entre les deux. En cas de présence d'un refroidisseur en entrée du compresseur, il est avantageux de prévoir un ballon intermédiaire pour séparer l'eau de condensation (l'eau de condensation peut ensuite être redirigée vers le réservoir de solution absorbante ou vers le régénérateur duquel est issu le flux gazeux à comprimer). Le moyen de refroidissement peut être un échangeur de chaleur (avec un milieu externe) ou éventuellement un contacteur avec l'amine riche issue de l'étage précédent. Ce dernier cas est représenté plus particulièrement à la **Figure 1** **bis** pour ce qui est de l'exemple du dédoublement du compresseur 26. La conduite de transport gazeux 25 se compose alors, du deuxième régénérateur 21 vers le premier régénérateur 11 : d'une première partie 25a sur laquelle est placé un premier compresseur 26a ; et d'une seconde partie 25b sur laquelle est placé un second compresseur 26b. Entre la première partie 25a et la seconde partie 25b est prévu un contacteur 71. De même, la conduite de transport liquide 13 se compose alors, du premier régénérateur 11 vers le deuxième régénérateur 21 : d'une première partie 13a sur laquelle est placé un premier détendeur 14a ; et d'une seconde partie 13b sur laquelle est placé un second détendeur 14b. Le contacteur 71 se situe entre la première partie 13a et la seconde partie 13b. Ainsi, le contacteur 71 est alimenté en entrée par la première partie 13a de la conduite de transport liquide (en tête) et par la première partie 25a de la conduite de transport gazeux (en pied) ; et il alimente en sortie la seconde partie 13b de la conduite de transport liquide (en pied) et la seconde partie 25b de la conduite de transport gazeux (en tête). Le refroidissement au sein du contacteur 71 se fait par contact direct entre le gaz et le liquide. Le contacteur 71 peut consister en un simple récipient doté de moyens de pulvérisation de solution absorbante ou, de manière préférée, en une colonne à plateaux (ou une colonne à garnissage).
- De même, un système de refroidissement peut être prévu en entrée des moyens aval de compression 41.
- Il est possible de prévoir un système de détente flash en amont du premier régénérateur, comme cela est décrit ci-dessous en relation avec la **figure 3****.**

En faisant à présent référence à la **figure 2****,** l'installation précédemment décrite est modifiée simplement par l'ajout d'une conduite de soutirage de mélange gazeux riche en sulfure d'hydrogène 37, branchée soit sur la conduite de transport gazeux 25 du deuxième régénérateur 21 vers le premier régénérateur 11, soit, de préférence et comme cela est représenté ici, sur la conduite de transport gazeux 35 du troisième régénérateur 31 vers le deuxième régénérateur 21, en amont ou en aval du compresseur 36, soit encore sur les deux conduites à la fois.

Toujours en faisant référence à la **figure 2****,** une autre modification est apportée, conjointement à la modification précédemment décrite. Il s'agit de la présence d'une colonne d'absorption supplémentaire 43, présente dans le circuit de régénération de solution absorbante.

Plus précisément, la colonne d'absorption supplémentaire 43 (qui peut être d'un type décrit ci-dessus en relation avec la colonne d'absorption 2) est alimentée en pied par la conduite de soutirage de mélange gazeux riche en dioxyde de carbone 15 qui est refroidi et peut être comprimé, et en tête par une conduite d'amenée de solution absorbante supplémentaire 44. De préférence, la conduite d'amenée de solution absorbante supplémentaire 44 est issue d'un branchement sur la conduite d'amenée de solution absorbante 33. Cette conduite d'amenée de solution absorbante supplémentaire 44 peut également être issue d'un branchement sur la conduite de transport liquide 23 du deuxième régénérateur 21 vers le troisième régénérateur 31, après passage par des moyens de refroidissement et une pompe (cas non représenté ici). En tête de la colonne d'absorption supplémentaire 43 est branchée en sortie une conduite de soutirage de mélange gazeux très riche en dioxyde de carbone 45, qui alimente les moyens aval de compression 41 décrits ci-dessus. En pied de la colonne d'absorption supplémentaire 43 est branchée en sortie une conduite de soutirage de solution absorbante 46 qui alimente en tête le premier régénérateur 11.

D'autres variantes possibles de l'installation sont visibles sur la **figure 3****.** Elles peuvent être prévues indépendamment les unes des autres ou de manière conjointe. Elles peuvent également être prévues indépendamment des variantes précédemment décrites en rapport avec la **figure 1** ou la **figure 2****,** ou conjointement avec celles-ci.

Une première variante possible consiste à prévoir, entre la colonne d'absorption 2 et le premier régénérateur 11, un ballon de détente flash 51 alimenté par la conduite de soutirage de solution absorbante riche 4. En sortie du ballon de détente flash 51 sont branchées : d'une part une conduite de soutirage de gaz flashés 52, et d'autre part une conduite de soutirage de solution absorbante détendue 53, qui alimente en tête le premier régénérateur 11. On peut alors prévoir un détendeur supplémentaire 5bis à l'entrée du régénérateur 11.

Une deuxième variante possible consiste à prévoir une conduite de prélèvement de solution absorbante 61 au niveau de la colonne d'absorption 2. Cette conduite de prélèvement de solution absorbante 61 alimente des moyens de refroidissement 62, en sortie desquels une conduite d'injection de solution absorbante refroidie 63 alimente en retour la colonne d'absorption 2. Cette deuxième variante constitue un système de refroidissement intermédiaire au niveau de la colonne d'absorption 2, situé par exemple en position approximativement médiane sur la colonne.

Une troisième variante possible consiste à prévoir que la conduite d'injection de solution absorbante refroidie 63 soit alimentée en tout ou en partie par une conduite de déviation de solution absorbante 64.

Cette conduite de déviation de solution absorbante 64 peut être alimentée :
- par une déviation 64a branchée sur la conduite de soutirage de solution absorbante détendue 53, des moyens de refroidissement 65a et une pompe 66a étant prévus sur ladite déviation 64a ; ou
- par une déviation 64b branchée sur la conduite de transport liquide 13 du premier régénérateur 11 vers le deuxième régénérateur 21, des moyens de refroidissement 65b et une pompe 66b étant prévus sur ladite déviation 64b ; ou
- par une déviation 64c branchée sur la conduite de transport liquide 23 du deuxième régénérateur 21 vers le troisième régénérateur 31, des moyens de refroidissement 65c et une pompe 66c étant prévus sur ladite déviation 64c ; ou
- par une déviation 64d branchée directement en sortie en pied de la colonne d'absorption supplémentaire 43 (qui peut éventuellement capter la totalité du flux sortant), des moyens de refroidissement 65d et une pompe 66d étant prévus sur ladite déviation 64d ; ou
- par une combinaison d'une ou plusieurs des déviations 64a, 64b, 64c, 64d.

Les moyens de refroidissement 65a, 65b, 65c et / ou 65d d'une part et les pompes 66a, 66b, 66c et / ou 66d d'autre part peuvent être communs en cas de combinaison de plusieurs déviations. Mais ils sont de préférence distincts car les conditions de température et pression sont généralement différentes dans chaque déviation.

Les moyens de refroidissement 65a, 65b, 65c et / ou 65d peuvent comprendre un échangeur de chaleur utilisant un milieu externe (air, eau, eau de mer...) et optionnellement, pour les moyens de refroidissement 65b et 65c, en amont de celui-ci, un échangeur de chaleur avec la solution absorbante (l'échange de chaleur s'effectuant par exemple avec le liquide circulant dans la conduite de soutirage de solution absorbante riche 4), à des fins d'optimisation énergétique. Lorsqu'un tel échangeur de chaleur avec la solution absorbante est prévu, on peut éventuellement placer l'échangeur de chaleur utilisant un milieu externe après la pompe 66b ou 66c, et éventuellement prévoir que ce ou ces échangeurs de chaleur utilisant un milieu externe soient confondus avec les moyens de refroidissement 62.

Un couplage énergétique est par ailleurs possible entre les moyens de chauffage 12, 22, 32 et les moyens de refroidissement 62, 65a, 65b, 65c et / ou 65d.

L'installation de l'invention peut être intégrée par exemple dans une usine de production de gaz naturel liquéfié, ou encore sur une plate-forme offshore. Elle permet la mise en oeuvre du procédé selon l'invention.

### Procédé de traitement de mélange gazeux comprenant des gaz acides

L'invention permet le traitement de mélange gazeux, notamment du gaz naturel. La description qui suit est établie en relation avec le gaz naturel, mais un autre type de mélange gazeux contenant des gaz acides peut également être traité par le procédé de l'invention. Par exemple le procédé de l'invention permet de traiter des fumées.

Le gaz naturel contient des gaz acides, en particulier du sulfure d'hydrogène et/ou du dioxyde de carbone et/ou du sulfure de carbonyle, le tout en des quantités volumiques par exemple de : 0 à 60 % d'H₂S, 0 à 80 % de CO₂ et 0 à 100 ppm de COS. Des mercaptans (R-SH) et du disulfure de carbone (CS₂) peuvent également être présents dans le mélange gazeux. La teneur en chacun des gaz susmentionnés est avantageusement substantiellement réduite grâce au procédé objet de l'invention.

Le gaz naturel, après l'étape de désacidification par mise en contact avec la solution absorbante, peut ultérieurement être déshydraté. Il est alors éventuellement disponible pour une distribution dans le réseau de gaz naturel. Par ailleurs, le gaz naturel après la désacidification et la déshydratation peut subir des traitements ultérieurs en vue de sa liquéfaction, ce qui permet d'obtenir du gaz naturel liquéfié.

La solution absorbante utilisée dans le cadre de l'invention peut être une solution d'absorption chimique, physique, ou physico-chimique. De préférence il s'agit d'une solution d'absorption chimique ou physico-chimique. Toutes les solutions absorbantes connues pour leur capacité à absorber les gaz acides mélangés aux hydrocarbures sont utilisables.

De préférence, la solution absorbante est une solution à base d'amine, notamment d'alcanolamine. A ce titre, l'alcanolamine peut notamment être choisie parmi le groupe constitué par la monoéthanolamine (MEA), la diglycolamine (DGA), la diisopropanolamine (DIPA), la diéthanolamine (DEA), la méthyldiéthanolamine (MDEA), la méthyldiéthanolamine activée (par exemple enrichie d'hydroxyéthylpipérazine ou de pipérazine), la triéthanolamine (TEA), les amines stériquement encombrées et leurs mélanges.

De préférence, l'alcanolamine est mélangée avec de l'eau et éventuellement avec un solvant physique.

Tout solvant physique connu convient à cette fin, et notamment le sulfolane. Ainsi, selon un mode de réalisation particulier, la solution absorbante comprend un mélange de DIPA, d'eau et de sulfolane, ou de MDEA, d'eau et de sulfolane.

Un autre type de solvant physique particulièrement avantageux est constitué par les thioalcanols en C₂-C₄, de formule R-S-C₂₋₄-OH où R est un groupement quelconque, par exemple un groupement alkyle ou un groupement alcool ou un groupement thiol ou un groupement alkylthioalcanol, le groupement contenant notamment jusqu'à 6 atomes de carbone. Le thiodiglycol (TDG) est un solvant physique particulièrement préféré. Il s'agit du composé de formule S(CH₂-CH₂-OH)₂. Outre le TDG, d'autres thioalcanols en C₂-C₄ peuvent être utilisés selon l'invention, notamment le méthylthioéthanol ou encore des molécules dimères et notamment l'éthylène-dithioéthanol, de formule (HO-CH₂-CH₂)-S-(CH₂-CH₂)-S-(CH₂-CH₂-OH).

A cet égard on fait référence ici à la demande de brevet français n°06/00448, déposée le 18/01/06 et publiée sous le numéro FR 2 896 244, et à la demande internationale n° WO 2007/083012.

Selon un premier mode de réalisation préféré, la solution absorbante comprend :
- environ 20 à environ 60 % en masse de diéthanolamine ; et
- environ 40 à environ 80 % en masse d'eau.

Selon un deuxième mode de réalisation préféré, la solution absorbante comprend :
- environ 20 à environ 60 % en masse de méthyldiéthanolamine ; et
- environ 40 à environ 80 % en masse d'eau.

Selon un troisième mode de réalisation préféré, la solution absorbante comprend :
- environ 20 à environ 60 % en masse de méthyldiéthanolamine activée ; et
- environ 40 à environ 80 % en masse d'eau.

Selon un quatrième mode de réalisation particulièrement préféré, la solution absorbante comprend :
- environ 20 à environ 60 % en masse de diéthanolamine ;
- environ 20 à environ 60 % en masse d'eau ; et
- environ 10 à environ 40 % en masse de thiodiéthylène glycol ;
ou, de manière plus avantageuse :
- environ 30 à environ 45 % en masse de diéthanolamine ;
- environ 30 à environ 50 % en masse d'eau ; et
- environ 15 à environ 30 % en masse de thiodiéthylène glycol ;
ou, de manière encore plus avantageuse :
- environ 40 % en masse de diéthanolamine ;
- environ 40 % en masse d'eau ; et
- environ 20 % en masse de thiodiéthylène glycol.

Selon un cinquième mode de réalisation particulièrement préféré, la solution absorbante comprend :
- environ 20 à environ 60 % en masse de méthyldiéthanolamine ;
- environ 20 à environ 60 % en masse d'eau ; et
- environ 10 à environ 40 % en masse de thiodiéthylène glycol.

Selon un sixième mode de réalisation particulièrement préféré, la solution absorbante comprend :
- environ 20 à environ 60 % en masse de méthyldiéthanolamine activée ;
- environ 20 à environ 60 % en masse d'eau ; et
- environ 10 à environ 40 % en masse de thiodiéthylène glycol.

L'utilisation du co-solvant thioalcanol et plus particulièrement TDG est avantageuse car elle permet d'éliminer une part importante des mercaptans contenus dans le mélange gazeux à traiter.

Le gaz naturel à traiter, ascendant dans la colonne d'absorption 2, est mis en contact avec la solution absorbante (dite pauvre), descendante. La solution absorbante absorbe la majorité des gaz acides, et le gaz naturel traité est récupéré. La température dans la colonne est comprise entre environ 20 et environ 100°C, de préférence environ 40 et environ 90°C. La pression dans la colonne est comprise entre 1 et 150 bar de préférence entre 40 et 100 bar effectif. L'opération s'effectue à un débit de mélange gazeux entre 0,23×10⁶ Nm³/jour et 56×10⁶ Nm³/jour et à un débit de solution absorbante entre 800 et 100000 m³/jour.

Le gaz naturel ainsi traité (désacidifié) subit ensuite d'autres étapes de traitement ultérieur, par exemple une étape de liquéfaction pour produire du gaz naturel liquéfié.

La solution absorbante chargée en gaz acides, ou solution absorbante riche, est par ailleurs régénérée. Une étape préliminaire et optionnelle de la régénération consiste en la détente flash de la solution absorbante au sein du ballon de détente flash 51. A l'issue de cette détente flash, la solution absorbante est à une température comprise entre 30°C et 90°C, et à une pression comprise entre 10 bar effectif et 30 bar effectif. Des gaz flashés sont récupérés par simple effet de la différence de pression. Ces gaz flashés peuvent être traités en aval, notamment pour récupérer une éventuelle fraction d'hydrocarbures contenus dans ces gaz flashés, en plus des gaz acides.

Puis la solution absorbante entre dans le premier régénérateur 11 ou régénérateur à haute pression, qui fonctionne par exemple à une pression comprise entre 5 et 20 bar effectif (première étape de régénération). La température est de préférence la plus élevée possible tout en étant inférieure à la température de dégradation chimique et thermique de la solution absorbante. Par exemple cette température peut être comprise entre 90°C et 150°C, de préférence elle peut être d'environ 130°C. On récupère en sortie du premier régénérateur 11 des gaz acides à haute pression, ce qui est avantageux dans la perspective d'une utilisation subséquente des gaz acides dans des systèmes de réinjection en puits, puisque cette utilisation subséquente nécessite une compression des gaz acides. Cette compression est donc moins importante dans le cas présent que dans une installation classique.

La solution absorbante, dégazée dans le premier régénérateur 11, subit un deuxième dégazage dans le deuxième régénérateur 21 ou régénérateur à moyenne pression, après avoir été détendue au niveau du détendeur 14. Cette deuxième étape de régénération s'effectue par exemple à une pression comprise entre 2 et 6 bar effectif. Ici encore, la température est de préférence la plus élevée possible mais inférieure à la température de dégradation chimique et thermique de la solution absorbante. Par exemple cette température peut être comprise entre 90°C et 150°C, de préférence elle peut être d'environ 130°C.

La solution absorbante, dégazée dans le deuxième régénérateur 21, subit un troisième dégazage dans le troisième régénérateur 31 ou régénérateur à basse pression, après avoir été détendue au niveau du détendeur 24. Cette troisième étape de régénération s'effectue par exemple à une pression comprise entre 0,5 et 1,5 bar effectif. La température est de préférence la température d'ébullition de la solution absorbante à la pression de régénération et est inférieure à la température de dégradation chimique et thermique de la solution absorbante. Par exemple cette température peut être comprise entre 90°C et 150°C, de préférence elle peut être d'environ 130°C.

La température à la première et à la deuxième étape de régénération (premier et deuxième régénérateur) est généralement inférieure à la température d'ébullition de la solution absorbante, en raison de la pression d'opération relativement élevée. En revanche, la température à la troisième étape de régénération (troisième régénérateur) est généralement égale à la température d'ébullition de la solution absorbante, en raison de la pression d'opération plus basse. Ainsi, la régénération étagée qui est l'objet de l'invention permet de surmonter l'inconvénient des installations classiques, dans lesquelles la régénération thermique est effectuée directement à basse pression afin de bénéficier d'une ébullition, ce qui s'avère désavantageux dans la mesure où les gaz acides récupérés doivent ensuite subir une recompression importante avant d'être réinjectés en gisement.

La température à chaque étape est maintenue par un apport de chaleur. Cet apport de chaleur s'effectue éventuellement à l'aide des moyens de chauffage 12, 22, 32 lorsqu'ils sont présents, et en tout cas en partie par l'injection de gaz recomprimés, issus du troisième régénérateur 31 vers le deuxième régénérateur 21 et issus du deuxième régénérateur 21 vers le premier régénérateur 11. Une économie d'énergie est ainsi réalisée sur les moyens de chauffage. Le gain énergétique total au niveau de l'ensemble de l'installation est de l'ordre de 10%.

A l'issue de la troisième étape de régénération, la solution absorbante est complètement régénérée (solution pauvre) et peut être réutilisée pour l'absorption des gaz acides.

Il est évident que l'invention peut également être mise en oeuvre avec quatre étapes de régénération (quatre régénérateurs) ou davantage.

Selon l'invention, il est possible de prélever une partie des gaz acides à l'issue de la troisième étape de régénération (ou même éventuellement à l'issue de la deuxième étape de régénération). Ces gaz acides sont riches en H₂S, c'est-à-dire que le rapport molaire H₂S/CO₂ y est plus élevé que dans le mélange gazeux de départ à traiter. A l'inverse, les gaz acides récupérés au niveau de la première étape de régénération sont riches en CO₂, c'est-à-dire que le rapport molaire H₂S/CO₂ y est plus faible que dans le mélange gazeux de départ à traiter. Ainsi, selon cette variante on sépare sélectivement les gaz acides H₂S et CO₂.

De préférence, la fraction de gaz acides riche en H₂S comprend plus de 90 %, de manière plus particulièrement préférée plus de 95 %, voire plus de 99 % de H₂S.

De préférence, le mélange gazeux riche en CO₂ comprend plus de 50 %, plus de 60 %, plus de 70 % ou plus de 80 % de CO₂. De manière plus particulièrement préférée, il comprend plus de 90 % de CO₂, voire plus de 95 % de CO₂ et idéalement entre 95 et 98 % de CO₂.

Si un traitement postérieur du mélange gazeux riche en dioxyde de carbone est prévu, afin d'accroître la pureté en CO₂ et de fournir un mélange gazeux dit « très riche » en dioxyde de carbone, ce mélange gazeux très riche en dioxyde de carbone comprend plus de 50%, plus de 60 %, plus de 70 % ou plus de 80 % de CO₂. De manière plus particulièrement préférée, il comprend plus de 90 % de CO₂, voire plus de 95 % de CO₂ et idéalement entre 95 et 98 % de CO₂.

Tous les pourcentages des teneurs en gaz sont des pourcentages volumiques sauf mention contraire.

De préférence, le facteur de sélectivité ([H₂S]₁ + [CO₂]₂) / ([CO₂]₁ + [H₂S]₂), où [H₂S]₁ représente la concentration volumique en H₂S dans la fraction riche en H₂S, [CO₂]₁ représente la concentration volumique en CO₂ dans la fraction riche en H₂S, [H₂S]₂ représente la concentration volumique en H₂S dans la fraction riche en CO₂, et [CO₂]₂ représente la concentration volumique en CO₂ dans la fraction riche en CO₂, est supérieur à 15. De manière plus particulièrement préférée, ce facteur de sélectivité est supérieur à 30 et idéalement il est supérieur à 60.

L'obtention de cet effet suppose d'utiliser une solution absorbante présentant une meilleure affinité pour le sulfure d'hydrogène que pour le dioxyde de carbone, ce qui est le cas notamment avec une solution absorbante à base de MDEA ou de MDEA activée, et dans une certaine mesure avec une solution à base de DEA, ou encore avec une solution absorbante à base de mélange DEA / TDG ou MDEA / TDG ou MDEA activée / TDG. Etant donné que les gaz comprimés issus de l'étage de régénération inférieur sont enrichis en H₂S, leur réinjection à l'étage supérieur a pour effet de chasser une partie du CO₂ contenu dans la solution absorbante au profit de l'H2S. Une température de 100-130°C et une pression de 5-20 bar effectif constituent des conditions particulièrement favorables pour la séparation sélective du CO₂ et de H₂S. La séparation sélective est utile parce qu'elle permet de traiter spécifiquement le sulfure d'hydrogène, par exemple au sein d'une unité Claus de production de soufre, et d'utiliser spécifiquement le gaz carbonique, par exemple pour l'amélioration de récupération d'huiles hydrocarbures (EOR) c'est-à-dire la réinjection sous pression en puits. La fraction riche en H₂S est significativement exempte d'hydrocarbures, et notamment d'aromatiques (BTEX), qui sont problématiques pour les unités Claus. En outre, si le H₂S n'est pas destiné à être valorisé et doit être séquestré dans le sous-sol, la sélectivité permet de ne pas gaspiller d'espace dans le sous-sol avec du dioxyde de carbone.

Les procédés classiques de séparation sélective, qui utilisent deux circuits séparés avec deux solutions absorbantes distinctes, sont plus coûteux que le présent procédé.

On peut améliorer la séparation sélective en traitant les gaz acides récupérés à la première étape de régénération (sortie du premier régénérateur 11) avec de la solution absorbante pauvre (voir la colonne d'absorption supplémentaire 43 dans les installations des **figures 2** et **3**). Ainsi, la plus grande partie de la portion résiduelle d'H₂S présent à ce stade est recyclée dans le circuit de régénération de la solution absorbante, tandis que la portion de gaz acides non absorbés et finalement récupérée est encore enrichie en CO₂.

La colonne d'absorption supplémentaire 43 fonctionne à une pression supérieure ou égale à celle du premier régénérateur 11 et à une température comprise entre 20°C et 90°C, de préférence la plus basse possible, par exemple entre 20 et 50°C ou idéalement entre 20 et 30°C.

Il est également possible d'effectuer le traitement des gaz acides récupérés à la première étape de régénération (fraction riche en dioxyde de carbone) au moyen d'une colonne de distillation CO₂/H₂S classique à la place de la colonne d'absorption supplémentaire 43.

Le degré de pureté de la fraction riche en CO₂ d'une part, et de la fraction riche en H₂S d'autre part, dépend principalement de quatre facteurs :
1) le rapport de concentrations volumiques CO₂ / H₂S en entrée du système ;
2) la proportion du H₂S total qui est prélevée dans la fraction riche en H₂S (ou le coefficient de partage, en sortie de tête du troisième régénérateur, entre la partie qui est prélevée du système et la partie qui est réinjectée et recomprimée vers l'étage supérieur) ;
3) la présence ou l'absence d'un traitement de la fraction riche en CO₂ ;
4) la pression d'opération, et notamment la pression d'opération du premier régénérateur.

Les autres paramètres de fonctionnement du système (températures, pressions, solution absorbante) et le choix des matériels (régénérateurs) ont également une influence.

En ce qui concerne le facteur 2), c'est-à-dire l'influence de la proportion du H₂S total qui est prélevée dans la fraction riche en H₂S (ou du coefficient de partage en sortie de tête du troisième régénérateur), on note que plus le débit de la fraction riche en H₂S est important, plus on augmente la teneur en CO₂ de la fraction riche en CO₂, mais plus on dégrade la pureté en H₂S de la fraction riche en H₂S. Ce phénomène est illustré dans les **figures 4 à 8****.**

Afin d'obtenir une séparation sélective optimale du CO₂ et de l'H₂S, il est généralement approprié de prélever entre 40 et 90 % de la quantité totale de H₂S présente dans le système, de préférence entre 50 et 80 %, de manière plus particulièrement préférée entre 65 et 75 %. Corrélativement, le volume prélevé par la ligne de soutirage 37 représente avantageusement de 10 à 70 %, de préférence de 15 à 50 % par rapport au flux total sortant en tête du troisième régénérateur (coefficient de partage). Toutefois, l'homme du métier appréciera qu'il est possible d'adapter ou de modifier les valeurs ci-dessus en fonction des autres paramètres en jeu, et notamment en fonction des facteurs 1) et 3) mentionnés ci-dessus.

En particulier, afin d'obtenir la séparation sélective souhaitée, il est préféré de recourir à un traitement de la fraction riche en CO₂ lorsque le rapport de concentration volumique CO₂ / H₂S en entrée du système est inférieur à 10, particulièrement lorsqu'il est inférieur à 8, plus particulièrement lorsqu'il est inférieur à 6, et tout particulièrement lorsqu'il est inférieur à 4. Corrélativement, selon la pureté souhaitée pour chacune des deux fractions, on peut avantageusement se dispenser du traitement de la fraction riche en CO₂ lorsque le rapport de concentration volumique CO₂ / H₂S en entrée du système est supérieur à 4, particulièrement lorsqu'il est supérieur à 6, plus particulièrement lorsqu'il est supérieur à 8, et tout particulièrement lorsqu'il est supérieur à 10.

Ceci est illustré par les cinq exemples ci-dessous. Ces exemples sont mis en oeuvre avec un taux de charge de l'amine en fond d'absorbeur d'environ 0,5 mol/mol et des pressions opératoires de 14, 4 et 1 bar effectif respectivement au niveau du premier, du deuxième et du troisième régénérateur.

A titre de premier exemple, si le rapport de concentration volumique CO₂ / H₂S en entrée du système est égal à 0,5, et en l'absence de traitement du flux CO₂ (voir **figure 4**), soutirer la totalité du flux en tête du régénérateur à basse pression (troisième régénérateur) permet au mieux de récupérer 82 % de l'H₂S rentrant et produit un flux CO₂ à 57 % de CO₂ seulement.

A titre de deuxième exemple, si le rapport de concentration volumique CO₂ / H₂S en entrée du système est égal à 1 (voir **figure 5**), et sans traitement du flux CO₂, il est intéressant de soutirer environ 67 % de l'H₂S initial, ce qui conduit à un flux H₂S à 99 % de pureté et à un flux CO₂ à 72 % de pureté. Ceci correspond à un coefficient de partage de 50 % en tête du régénérateur à basse pression. Augmenter le soutirage au-delà de cette valeur ne permet pas d'améliorer significativement la qualité du flux CO₂ (sans traitement complémentaire) et cela dégrade rapidement la qualité du flux H₂S car c'est la part de CO₂ dans ce flux qui augmente. A l'inverse, en dessous de cette valeur, la teneur en H₂S dans le flux CO₂ est plus importante et augmente lorsqu'on diminue le débit de soutirage. Le flux H₂S reste de composition inchangée, quasi-pur.

A titre de troisième exemple, si le rapport de concentration volumique CO₂ / H₂S en entrée du système est égal à 3 (voir **figure 6**), et sans traitement du flux CO₂, le point optimal se situe à environ 74 % de l'H₂S initial soutiré (coefficient de partage de 40 %), ce qui conduit à un flux H₂S à 99 % de pureté et à un flux CO₂ à 83 % de pureté.

A titre de quatrième exemple, si le rapport de concentration volumique CO₂ / H₂S en entrée du système est égal à 5 (voir **figure 7**), et sans traitement du flux CO₂, le point optimal se situe à 69 % de l'H₂S initial soutiré (coefficient de partage de 25 %), ce qui conduit à un flux H₂S à 99 % de pureté et à un flux CO₂ à 89 % de pureté.

A titre de cinquième exemple, si le rapport de concentration volumique CO₂ / H₂S en entrée du système est égal à 8 (voir **figure 8**), et sans traitement du flux CO₂, prélever 66 % de H₂S initial (coefficient de partage de 18 %) conduit aux meilleures qualités de produits : 99 % pour l'H₂S et 92 % pour le CO₂. La qualité du flux CO₂ est alors particulièrement intéressante pour une utilisation en EOR.

Ainsi, pour des ratios CO₂ / H₂S en entrée inférieurs à 8, la qualité du flux CO₂ n'est pas optimale et nécessite de préférence un traitement complémentaire, par exemple un lavage avec une partie du solvant régénéré. Au-delà de ce ratio, le flux CO₂ ne contiendra que quelques % d' H₂S ce qui est compatible avec une réinjection EOR.

Dans tous les cas, la présence d'un traitement du flux CO₂ permet de récupérer la quasi-totalité de l'H₂S présent dans la solution absorbante au niveau du flux de sortie H₂S.

En ce qui concerne le facteur 4), c'est-à-dire l'influence de la pression d'opération du premier régénérateur, il est préférable de travailler à pression élevée afin d'améliorer la qualité de la séparation. Ainsi, une pression dans le premier régénérateur comprise entre 10 et 20 bar absolus, de préférence entre 12 et 18 bar effectif, de manière plus particulièrement préférée voisine de 14 bar effectif, permet une meilleure séparation sélective.

A titre d'exemple, pour un ratio CO₂ / H₂S égal à 1 en entrée, il est possible de récupérer environ 74 % de l'H₂S entrant dans un flux à 90 % de pureté avec un régénérateur à haute pression fonctionnant à 14 bar effectif, contre 67 % à 7 bar effectif. De même, pour un ratio CO₂ / H₂S égal à 3, il est possible de récupérer 78 % de l'H₂S entrant dans un flux à 90 % de pureté avec un régénérateur à haute pression opérant à 14 bar effectif, contre 71% à 7 bar effectif. En conclusion, pour une même qualité de flux H₂S, passer de 7 bar effectif à 14 bar effectif permet de récupérer environ 10 % d'H₂S supplémentaire (et d'améliorer par ailleurs la qualité du flux CO₂ associé).

Néanmoins, augmenter la pression du régénérateur à haute pression suppose d'adapter en conséquence la puissance de compression et la taille des compresseurs. Une pression d'environ 14 bar effectif constitue un bon compromis compte tenu des taux de compression à préserver entre les étages et compte tenu de la classe de tuyauterie généralement utilisée.

Selon une variante de l'invention, il est possible de refroidir les gaz issus du troisième régénérateur (respectivement du deuxième régénérateur) et de séparer l'eau de condensation préalablement à la recompression. Ainsi, il est possible de faire fonctionner les compresseurs dans des gammes de paramètres nominales (notamment quant à la capacité des compresseurs et à la résistance des matériaux). Ce refroidissement impose d'augmenter la puissance des rebouilleurs au niveau des régénérateurs, mais le surcroît correspondant de consommation d'énergie est compensé en partie par la diminution de la puissance de compression (l'eau condensée n'étant pas recomprimée, le débit dans les compresseurs est moindre). En outre, opter pour un tel refroidissement n'influe pas sur la qualité de la séparation sélective des gaz H₂S et CO₂.

Si un tel refroidissement est présent, il peut être approprié d'abaisser la température en entrée des compresseurs (aspiration) jusqu'à 20-60°C (contre 90-120°C sans refroidissement). La température en sortie des compresseurs (refoulement) est corrélativement refroidie jusqu'à 140-180°C (contre 200-260°C sans refroidissement).

Le **tableau 1** ci-dessous présente à titre d'exemple une comparaison (issue de simulations numériques) entre le fonctionnement des deuxième et troisième régénérateurs avec et sans le refroidissement décrit ci-dessus.

**Tableau 1 - Fonctionnement comparé avec et sans refroidissement en entrée des compresseurs**

| | Deuxième régénérateur | | Troisième régénérateur | |
|---|---|---|---|---|
| Refroidissement en entrée du compresseur vers l'étage supérieur | Oui | Non | Oui | Non |
| P aspiration (bar eff) | 3,7 | 3,7 | 0,9 | 0,9 |
| T aspiration (°C) | 55 | 115 | 55 | 111 |
| P refoulement (bar eff) | 14,1 | 14,1 | 3,9 | 3,9 |
| T refoulement (°C) | 170 | 250 | 170 | 250 |
| Composition (%mol) CO₂ / H₂S / H₂O | 67 / 29 / 3 | 44 / 17 / 38 | 3 / 88 / 8 | 1 / 34 / 64 |
| Débit (m³/h) | 1 378 | 2 500 | 7 938 | 24 210 |
| Puissance du compresseur (kW) vers l'étage supérieur | 753 | 1 403 | 460 | 1 380 |
| Puissance de rebouillage (MW) de l'étage supérieur | 12,2 | 7,4 | 6,5 | 0 |
| Puissance de réfrigération interne (kW), par ex. aéroréfrigérant | 70 | 0 | 140 | 0 |

Selon une variante de l'invention, l'efficacité du procédé est encore améliorée en prélevant une partie (voire la totalité) de la solution absorbante au cours de l'étape d'absorption dans la colonne d'absorption 2, en refroidissant la solution absorbante et en la remettant en contact avec le mélange gazeux à traiter dans la colonne d'absorption 2. Le prélèvement et la réinjection s'effectuent à une position intermédiaire entre le pied et la tête de la colonne, par exemple approximativement au milieu de la colonne. L'abaissement de la température de la solution absorbante en cours d'absorption permet d'augmenter le taux de charge de la solution absorbante en fond de colonne. Corrélativement, le débit de solution absorbante peut être réduit, par exemple d'environ 10 % pour un traitement de gaz à forte teneur en gaz acides.

On peut par ailleurs utiliser de la solution absorbante semi-riche comprimée et refroidie pour alimenter la colonne d'absorption 2 (en son milieu) en combinaison ou non avec de la solution absorbante prélevée sur la colonne d'absorption 2 et refroidie, la solution absorbante semi-riche étant obtenue soit à l'issue de l'étape de détente flash, soit à l'issue de la première ou deuxième étape de régénération, soit encore à l'issue de l'étape de traitement des gaz acides récupérés après la première étape de régénération. La solution semi-riche peut encore être une combinaison de flux correspondant à ces diverses origines.

## Revendications

1. Procédé de traitement d'un mélange gazeux contenant des gaz acides, comprenant :
- une mise en contact du mélange gazeux avec une solution absorbante, permettant d'obtenir un mélange gazeux désacidifié et une solution absorbante chargée en gaz acides ; et
- une régénération de la solution absorbante chargée en gaz acides ;
dans lequel la régénération comprend les étapes suivantes :
- passage de la solution absorbante dans un premier régénérateur à une première pression ; puis
- passage de la solution absorbante dans un deuxième régénérateur à une deuxième pression, inférieure à la première pression ;
- compression des gaz issus du deuxième régénérateur et recyclage des gaz ainsi compressés vers le premier régénérateur.
- à la suite du passage dans le deuxième régénérateur, passage de la solution absorbante dans un troisième régénérateur à une troisième pression inférieure à la deuxième pression ; et
- compression des gaz issus du troisième régénérateur et recyclage des gaz ainsi compressés vers le deuxième régénérateur ;
dans lequel au moins une partie des gaz issus du deuxième et / ou du troisième régénérateur est prélevée pour fournir un mélange gazeux riche en sulfure d'hydrogène et au moins une partie des gaz issus du premier régénérateur est prélevée pour fournir un mélange gazeux riche en dioxyde de carbone,
et dans lequel le mélange gazeux riche en dioxyde de carbone est mis en contact avec au moins une partie de la solution absorbante issue du deuxième ou du troisième régénérateur, afin de fournir un mélange gazeux très riche en dioxyde de carbone, la solution absorbante obtenue à l'issue de cette mise en contact subissant ensuite la régénération ou étant refroidie et mise en contact avec le mélange gazeux.

2. Procédé selon la revendication 1, dans lequel la première pression est comprise entre 5 et 20 bar effectif, la deuxième pression est comprise entre 2 et 6 bar effectif, et la troisième pression est comprise entre 0,5 et 1,5 bar effectif.

3. Procédé selon l'une des revendications 1 à 2, dans lequel le premier et / ou le deuxième et / ou le troisième régénérateur, sont chauffés ; et/ou dans lequel la solution absorbante n'est pas à ébullition dans le premier régénérateur et le deuxième régénérateur et est à ébullition dans le troisième régénérateur.

4. Procédé selon l'une des revendications 1 à 3, dans lequel au cours de l'étape de mise en contact du mélange gazeux avec la solution absorbante, une partie de la solution absorbante est prélevée, refroidie, et remise en contact avec le mélange gazeux ; et/ou dans lequel la solution absorbante subit une détente flash avant le passage dans le premier régénérateur.

5. Procédé selon l'une des revendications 1 à 4, dans lequel une partie de la solution absorbante obtenue à l'issue de la détente flash et / ou une partie de la solution absorbante obtenue à l'issue du passage dans le premier régénérateur et / ou une partie de la solution absorbante obtenue à l'issue du passage dans le deuxième régénérateur est refroidie et mise en contact avec le mélange gazeux.

6. Procédé selon l'une des revendications 1 à 5, dans lequel la solution absorbante comprend :
- au moins une alcanolamine, de préférence choisie parmi le groupe constitué de la diéthanolamine, de la méthyldiéthanolamine et de la méthyldiéthanolamine activée ;
- éventuellement un thioalcanol en C₂-C₄, de préférence le thiodiglycol ; et
- de l'eau ;
ou bien :
- au moins une alcanolamine, de préférence choisie parmi le groupe constitué de la diisopropanolamine et de la méthyldiéthanolamine ;
- éventuellement du sulfolane ; et
- de l'eau.

7. Procédé selon l'une des revendications 1 à 6, dans lequel le mélange gazeux est à base d'hydrocarbures, et de préférence est du gaz naturel, et/ou comprenant en outre l'étape suivante :
- déshydratation du mélange gazeux désacidifié.

8. Procédé selon l'une des revendications 1 à 7, dans lequel le mélange gazeux riche en sulfure d'hydrogène :
- comprend plus de 90 %, de préférence plus de 99 % de sulfure d'hydrogène et / ou le mélange gazeux riche en dioxyde de carbone ou le mélange gazeux très riche en dioxyde de carbone comprend plus de 90 %, de préférence plus de 95 % de dioxyde de carbone ; et/ou
- est prélevé du troisième régénérateur à raison de 10 à 70 %, de préférence de 15 à 50 % par rapport à la totalité des gaz issus du troisième régénérateur.

9. Installation de traitement d'un mélange gazeux contenant des gaz acides, comprenant :
- une colonne d'absorption (2) ;
- une conduite d'amenée de mélange gazeux (1) alimentant le pied de la colonne d'absorption (2) ;
- une conduite d'amenée de solution absorbante (33), alimentant la tête de la colonne d'absorption (2) ;
- un premier régénérateur (11) dont une entrée est reliée à une sortie en pied de la colonne d'absorption (2) via une conduite de soutirage de solution absorbante riche (4) ;
- un deuxième régénérateur (21) ;
- une conduite de transport liquide (13) du premier régénérateur (11) vers le deuxième régénérateur (21) ;
- une conduite de transport gazeux (25) du deuxième régénérateur (21) vers le premier régénérateur (11) ;
- un compresseur (26) situé sur la conduite de transport gazeux (25) du deuxième régénérateur (21) vers le premier régénérateur (11) ;
- un troisième régénérateur (31) ;
- une conduite de transport liquide (23) du deuxième régénérateur (21) vers le troisième régénérateur (31) ;
- une conduite de transport gazeux (35) du troisième régénérateur (31) vers le deuxième régénérateur (21) ;
- un compresseur (36) situé sur la conduite de transport gazeux (35) du troisième régénérateur (31) vers le deuxième régénérateur (21) ;
- une conduite de soutirage de mélange gazeux riche en sulfure d'hydrogène (37), branchée en sortie du deuxième régénérateur (21) et / ou du troisième régénérateur (31) ; et
- une conduite de soutirage de mélange gazeux riche en dioxyde de carbone (15), branchée en sortie du premier régénérateur (11) ;
- une colonne d'absorption supplémentaire (43), alimentée en pied par la conduite de soutirage de mélange gazeux riche en dioxyde de carbone (15) ;
- une conduite d'amenée de solution absorbante supplémentaire (44) alimentant en tête la colonne d'absorption supplémentaire (43) ;
- une conduite de soutirage de mélange gazeux très riche en dioxyde de carbone (45), branchée en sortie en tête de la colonne d'absorption supplémentaire (43) ; et dans laquelle l'installation comprend en outre :
- une conduite de soutirage de solution absorbante (46) branchée en sortie en pied de la colonne d'absorption supplémentaire (43) et alimentant éventuellement le premier régénérateur (11) ; ou
- une conduite de déviation de solution absorbante (64) alimentée par une première déviation (64a), une deuxième déviation (64b), une troisième déviation (64c), une quatrième déviation (64d) ou plusieurs de celles-ci, chaque déviation (64a, 64b, 64c, 64d) étant dotée de moyens de refroidissement (65a, 65b, 65c, 65d) et de pompes (66a, 66b, 66c, 66d), un ballon de détente flash (51) alimenté par la conduite de soutirage de solution absorbante riche (4) étant disposé entre la colonne d'absorption (2) et le premier régénérateur (11), dans laquelle :
• la première déviation (64a) est branchée en sortie du ballon de détente flash (51) ;
• la deuxième déviation (64b) est branchée en sortie du premier régénérateur (11) ;
• la troisième déviation (64c) est branchée en sortie du deuxième régénérateur (21) ; et
• la quatrième déviation (64d) est branchée en sortie de la colonne d'absorption supplémentaire (43).

10. Installation selon la revendication 9, comprenant un ou plusieurs des éléments suivants :
- un détendeur (5) situé sur la conduite de soutirage de solution absorbante riche (4) ;
- des moyens de refroidissement (34) et une pompe (39) situés sur la conduite d'amenée de solution absorbante (33) ;
- un détendeur (14) situé sur la conduite de transport liquide (13) du premier régénérateur (11) vers le deuxième régénérateur (21) ;
- un détendeur (24) situé sur la conduite de transport liquide (23) du deuxième régénérateur (21) vers le troisième régénérateur (31).

11. Installation selon l'une des revendications 9 ou 10, dans laquelle le premier régénérateur (11) et / ou le deuxième régénérateur (21) et / ou le troisième régénérateur (31) sont pourvus de moyens de chauffage (12, 22, 32).

12. Installation selon l'une des revendications 9 à 11, comprenant :
- des moyens de refroidissement (62) ;
- une conduite de prélèvement de solution absorbante (61) branchée sur la colonne d'absorption (2) et alimentant les moyens de refroidissement (62) ;
- une conduite d'injection de solution absorbante refroidie (63), branchée en sortie des moyens de refroidissement (62) et alimentant la colonne d'absorption (2) ; et/ou
- un ballon de détente flash (51) entre la colonne d'absorption (2) et le premier régénérateur (11).

13. Procédé de production de gaz naturel liquéfié comprenant :
- une étape de traitement d'un gaz naturel contenant des gaz acides, selon le procédé de l'une des revendications 1 à 8 ; et
- une étape de liquéfaction du gaz naturel traité.

## Patentansprüche

1. Verfahren zur Behandlung einer, saure Gase enthaltenden Gasmischung, umfassend:
- ein Inkontaktbringen der Gasmischung mit einer Absorptionslösung um die Gewinnung einer entsäuerten Gasmischung und einer, mit sauren Gasen beladener Absorptionslösung zu ermöglichen; und
- eine Regenerierung der mit sauren Gasen beladenen Absorptionslösung,
wobei die Regenerierung folgende Schritte umfasst:
- Durchgang der Absorptionslösung durch einen ersten Regenerator mit einem ersten Druck; danach
- Durchgang der Absorptionslösung durch einen zweiten Regenerator mit einem zweiten Druck, der niedriger ist als der erste Druck;
- Verdichten der aus dem zweiten Regenerator stammenden Gase und Rückführung der auf dieser Weise verdichteten Gase zu dem ersten Regenerator;
- nach deren Durchgang durch den zweiten Regenerator, Durchgang der Absorptionslösung durch einen dritten Regenerator mit einem dritten Druck, der niedriger ist als der zweite Druck; und
- Verdichten der aus dem dritten Regenerator stammenden Gase und Rückführung der auf dieser Weise verdichteten Gase zu dem zweiten Regenerator;
wobei mindestens ein Teil der aus dem zweiten und/oder dem dritten Regenerator stammenden Gase, zur Bereitstellung einer, an Schwefelwasserstoff reichen Gasmischung entnommen ist, und wobei mindestens ein Teil der aus dem ersten Regenerator stammenden Gase, zur Bereitstellung einer, an Kohlendioxid reichen Gasmischung entnommen ist,
und wobei die, an Kohlendioxid reiche Gasmischung mit mindestens einen Teil der aus dem zweiten und/oder dem dritten Regenerator stammenden Absorptionslösung in Kontakt gebracht wird, um eine, an Kohlendioxid sehr reiche Gasmischung bereitzustellen, wobei die, durch dieses Inkontaktbringen erhaltene Absorptionslösung anschließend die Regenerierung durchgeht oder abgekühlt wird und mit der Gasmischung in Kontakt gebracht wird.

2. Verfahren nach Anspruch 1, wobei der erste Druck im Bereich von 5 und 20 effektiven bar liegt, der zweite Druck im Bereich von 2 und 6 effektiven bar liegt, und der dritte Druck im Bereich von 0,5 und 1,5 effektiven bar liegt.

3. Verfahren nach einem der Ansprüche 1 bis 2, wobei der erste und/oder der zweite und/oder der dritte Regenerator erhitzt werden; und/oder wobei die Absorptionslösung im ersten und im zweiten Regenerator nicht siedet und im dritten Regenerator siedet.

4. Verfahren nach einem der Ansprüche 1 bis 3, wobei, während des Schrittes des Inkontaktbringens der Gasmischung mit der Absorptionslösung, ein Teil der Absorptionslösung entnommen, abgekühlt und wieder mit der Gasmischung in Kontakt gebracht wird; und/oder wobei die Absorptionslösung vor dem Durchgang durch den ersten Regenerator einer Flash-Expansion unterzogen wird.

5. Verfahren nach einem der Ansprüche 1 bis 4, wobei ein Teil der, nach Ablauf der Flash-Expansion erhaltenen Absorptionslösung, und/oder ein Teil der, nach dem Durchgang durch den ersten Regenerator erhaltenen Absorptionslösung, und/oder ein Teil der, nach dem Durchgang durch den ersten Regenerator erhaltenen Absorptionslösung abgekühlt und mit der Gasmischung in Kontakt gebracht wird.

6. Verfahren nach einem der Ansprüche 1 bis 5, wobei die Absorptionslösung Folgendes umfasst:
- mindestens ein Alkanolamin, vorzugsweise aus der Gruppe gewählt, bestehend aus Diethanolamin, Methyldiethanolamin und aktiviertem Methyldiethanolamin;
- gegebenenfalls ein C₂-C₄-Thioalkanol, vorzugsweise Thiodiglycol; und
- Wasser;
oder:
- mindestens ein Alkanolamin, vorzugsweise aus der Gruppe gewählt, bestehend aus Diisopropanolamin und Methyldiethanolamin;
- gegebenenfalls Sulfolan; und
- Wasser.

7. Verfahren nach einem der Ansprüche 1 bis 6, wobei die Gasmischung eine Kohlenwasserstoffbasis aufweist und vorzugsweise ein Erdgas ist, und/oder außerdem den folgenden Schritt umfasst:
- Dehydratisierung der entsäuerten Gasmischung.

8. Verfahren nach einem der Ansprüche 1 bis 7, wobei die an Schwefelwasserstoff reiche Gasmischung:
- mehr als 90%, vorzugsweise mehr als 99% Schwefelwasserstoff umfasst; und/oder die, an Kohlendioxid reiche Gasmischung oder die, an Kohlendioxid sehr reiche Gasmischung mehr als 90%, vorzugsweise mehr als 95% Kohlendioxid umfasst; und/oder
- von dem dritten Regenerator in einer Menge von 10 bis 70%, vorzugsweise 15 bis 50% entnommen wird, im Vergleich zu der Gesamtheit der Gase aus dem dritten Regenerator.

9. Anlage zur Behandlung einer saure Gase enthaltenden Gasmischung, umfassend:
- eine Absorptionssäule (2);
- eine Zuleitung für Gasmischung (1) die den Fuß der Absorptionssäule (2) speist;
- eine Zuleitung für Absorptionslösung (33) die den Kopf der Absorptionssäule (2) speist;
- ein erster Regenerator (11) dessen Einlass, über eine Entnahmeleitung für reiche Absorptionslösung (4) mit einem Auslass am Fuß der Absorptionssäule (2) verbunden ist
- ein zweiter Regenerator (21);
- eine Flüssigkeitsförderleitung (13) von dem ersten Regenerator (11) zu dem zweiten Regenerator (21) hin;
- eine Gasförderleitung (25) von dem zweiten Regenerator (21) zu dem ersten Regenerator (11) hin;
- ein Kompressor (26) der an der Gasförderleitung (25) des zweiten Regenerators (21) zu dem ersten Regenerator (11) hin angeordnet ist;
- ein dritter Regenerator (31);
- eine Flüssigkeitsförderleitung (23) von dem zweiten Regenerator (21) zu dem dritten Regenerator (31) hin;
- eine Gasförderleitung (35) von dem dritten Regenerator (31) zu dem zweiten Regenerator (21) hin;
- ein Kompressor (36) der an der Gasförderleitung (35) des dritten Regenerators (31) zu dem zweiten Regenerator (21) hin angeordnet ist;
- eine Entnahmeleitung für an Schwefelwasserstoff reiche Gasmischung (37), die am Auslass des zweiten Regenerators (21) und/oder des dritten Regenerators (31) angeschlossen ist; und
- eine Entnahmeleitung für an Kohlendioxid reiche Gasmischung (15), die am Auslass des ersten Regenerators (11) angeschlossen ist;
- eine zusätzliche Absorptionssäule (43), die am Fuß, durch die Entnahmeleitung für, an Kohlendioxid reiche Gasmischung (15) gespeist wird
- eine zusätzliche Zuleitung für Absorptionslösung (44) die am Kopf die zusätzliche Absorptionssäule (43) speist;
- eine Entnahmeleitung für, an Kohlendioxid sehr reiche Gasmischung (45), die am Auslass am Kopf der zusätzlichen Absorptionssäule (43) angeschlossen ist; und
wobei die Anlage ferner Folgendes umfasst:
- eine Entnahmeleitung für Absorptionslösung (46), die am Auslass am Fuß der zusätzlichen Absorptionssäule (43) angeschlossen ist, und die gegebenenfalls den ersten Regenerator (11) speist; oder
- eine Umwegleitung für Absorptionslösung (64), die durch eine erste Abweichung (64a), eine zweite Abweichung (64b), eine dritte Abweichung (64ac, eine vierte Abweichung (64d), oder durch mehreren davon gespeist wird, wobei jede Abweichung (64a, 64b,64c, 64d) mit Kühlungsmitteln (65a, 65b,65c, 65d) und Pumpen (66a, 66b,66c, 66d) versehen ist, und wobei eine, durch die Entnahmeleitung für reiche Absorptionslösung (4) gespeiste Flash-Trommel (51) zwischen der Absorptionssäule (2) und dem ersten Regenerator (11) angeordnet ist, wobei:
- die erste Abweichung (64a) am Auslass der Flash-Trommel (51) angeschlossen ist;
- die zweite Abweichung (64b) am Auslass des ersten Regenerators (11) angeschlossen ist;
- die dritte Abweichung (64c) am Auslass des zweiten Regenerators (21) angeschlossen ist;
- die vierte Abweichung (64d) am Auslass der zusätzlichen Absorptionssäule (43) angeschlossen ist.

10. Anlage nach Anspruch 9, die eines oder mehrere der folgenden Elemente umfasst:
- einen Expansionsventil (5) der an der Entnahmeleitung für reiche Absorptionslösung (4) angeordnet ist;
- Kühlungsmittel (34) und eine Pumpe (39), die an der Zuleitung für Absorptionslösung (33) angeordnet sind;
- einen Expansionsventil (14) der an der Flüssigkeitsförderleitung (13) des ersten Regenerators (11) zum zweiten Regenerator (21) hin angeordnet ist;
- einen Expansionsventil (24) der an der Flüssigkeitsförderleitung (23) des zweiten Regenerators (21) zum dritten Regenerator (31) hin angeordnet ist.

11. Anlage nach einem der Ansprüche 9 oder 10, wobei der erste Regenerator (11) und/oder der zweite Regenerator (21) und oder der dritte Regenerator (31) mit Heizeinrichtungen (12, 22, 32) ausgestattet sind.

12. Anlage nach einem der Ansprüche 9 bis 11, umfassend:
- Kühlungsmittel (62);
- eine Entnahmeleitung für Absorptionslösung (61) die an die Absorptionssäule (2) angeschlossen ist und die Kühlungsmittel (62) speist;
- eine Injektionsleitung für abgekühlte Absorptionslösung (63), die an dem Auslass der Kühlungsmittel (62) angeschlossen ist und die Absorptionssäule (2) speist; und/oder
- ein Expansionsbehälter (51) zwischen der Absorptionssäule (2) und dem ersten Regenerator.

13. Verfahren zur Herstellung von verflüssigtem Erdgas, umfassend:
- einen Schritt der Behandlung eines saure Gase enthaltenden Erdgases, nach dem Verfahren von einem der Ansprüche 1 bis 8; und
- einen Schritt der Verflüssigung des behandelten Erdgases.

## Claims

1. A method for treating a gas mixture containing acid gases, comprising:
- contacting the gas mixture with an absorbing solution, by means of which a de-acidified gas mixture and an absorbing solution loaded with acid gases may be obtained; and
- regeneration of the absorbing solution loaded with acid gases;
wherein the regeneration comprises the following steps:
- passing the absorbing solution into a first regenerator at a first pressure; and then
- passing the absorbing solution into a second regenerator at a second pressure, less than the first pressure;
- compressing the gases from the second regenerator and recycling the thereby compressed gases to the first regenerator;
- subsequent to passing into the second regenerator, passing the absorbing solution into a third regenerator at a third pressure less than the second pressure; and
- compressing the gases from the third regenerator and recycling the thereby compressed gases to the second regenerator;
and wherein at least a portion of the gases from the second and/or the third regenerator is drawn off in order to provide a gas mixture rich in hydrogen sulfide and at least a portion of the gases from the first regenerator is drawn off in order to provide a gas mixture rich in carbon dioxide,
wherein the gas mixture rich in carbon dioxide is contacted with at least a portion of the absorbing solution from the second or the third regenerator, in order to provide a gas mixture very rich in carbon dioxide, the absorbing solution obtained after this contacting, then undergoing regeneration or being cooled and put into contact with the gas mixture.

2. The method according to claim 1, wherein the first pressure is comprised between 5 and 20 bar gage pressure, the second pressure is comprised between 2 and 6 bar gage pressure, and the third pressure is comprised between 0.5 and 1.5 bar gage pressure.

3. The method according to any of claims 1 to 2, wherein the first and/or the second and/or the third regenerator are heated, and/or wherein the absorbing solution is not boiling in the first regenerator and the second regenerator and is boiling in the third regenerator.

4. The method according to any of claims 1 to 3, wherein during the step for contacting the gas mixture with the absorbing solution, a portion of the absorbing solution is drawn off, cooled and put back into contact with the gas mixture, and/or wherein the absorbing solution undergoes flash expansion before passing into the first regenerator.

5. The method according to any of claims 1 to 4, wherein a portion of the absorbing solution obtained from the flash expansion and/or a portion of the absorbing solution obtained after passing into the first regenerator and/or a portion of the absorbing solution obtained after passing into the second regenerator is cooled and put into contact with the gas mixture.

6. The method according to any of claims 1 to 5, wherein the absorbing solution comprises:
- at least one alkanolamine, preferably selected from the group of diethanolamine, methyldiethanolamine and activated methyldiethano lamine;
- optionally a C₂-C₄ thioalkanol, preferably thiodiglycol; and
- water;
or:
- at least one alkanolamine, preferably selected from the group of diisopropanolamine and methyldiethanolamine;
- optionally sulfolane; and
- water.

7. The method according to one of claims 1 to 6, wherein the gas mixture is hydrocarbon-based and preferably natural gas and/or further comprising the following step:
- dehydration of the de-acidified gas mixture.

8. The method according to any of claims 1 to 7, wherein the gas mixture rich in hydrogen sulfide:
- comprises more than 90%, preferably more than 99% of hydrogen sulfide and/or the gas mixture rich in carbon dioxide or the gas mixture very rich in carbon dioxide comprises more than 90%, preferably more than 95% of carbon dioxide;
and/or
- is withdrawn from the third regenerator in an amount of from 10 to 70%, preferably 15 to 50% compared with the total flow exiting from the head of the third regenerator.

9. An installation for treating a gas mixture containing acid gases, comprising:
- an absorption column (2);
- a gas mixture supply conduit (1) feeding the foot of the absorption column (2);
- an absorbing solution supply conduit (33) feeding the head of the absorption column (2);
- a first regenerator (11), an inlet of which is connected to a foot outlet of the absorption column (2) via a rich absorbing solution withdrawal conduit (4);
- a second regenerator (21);
- a conduit (13) for conveying a liquid from the first regenerator (11) to the second regenerator (21);
- a conduit (25) for conveying a gas from the second regenerator (21) to the first regenerator (11);
- a compressor (26) located on the conduit (25) for conveying a gas from the second regenerator (21) to the first regenerator (11);
- a third regenerator (31);
- a conduit (23) for conveying a liquid from the second regenerator (21) to the third regenerator (31);
- a conduit (35) for conveying a gas from the third regenerator (31) to the second regenerator (21);
- a compressor (36) located on the conduit (35) for conveying a gas from the third regenerator (31) to the second regenerator (21);
- a conduit (37) for withdrawing a gas mixture rich in hydrogen sulfide, connected at the outlet of the second regenerator (21) and/or of the third regenerator (31); and
- a conduit (15) for withdrawing a gas mixture rich in carbon dioxide connected at the outlet of the first regenerator (11);
- an additional absorption column (43), fed at the foot by the conduit (15) for withdrawing a gas mixture rich in carbon dioxide;
- an additional absorbing solution supply conduit (44) feeding the head of the additional absorption column (43);
- a conduit (45) for withdrawing a gas mixture very rich in carbon dioxide, connected at the head outlet of the additional absorption column (43); and
wherein the installation further comprises:
- a conduit (46) for withdrawing an absorbing solution, connected at the foot outlet of the additional absorption column (43) and optionally feeding the first regenerator (11); or
- an absorbing solution bypass conduit (64) fed by a first bypass (64a), a second bypass (64b), a third bypass (64c), a fourth bypass (64d) or several of the latter, each bypass (64a, 64b, 64c, 64d) being provided with cooling means (65a, 65b, 65c, 65d) and pumps (66a, 66b, 66c, 66d), a flash expansion chamber (51) fed by the rich absorbing solution withdrawal conduit (4) being arranged between the absorption column (2) and the first regenerator (11), wherein:
- the first bypass (64a) is connected at the outlet of the flash expansion chamber (51);
- the second bypass (64b) is connected at the outlet of the first regenerator (11);
- the third bypass (64c) is connected at the outlet of the second regenerator (21), and
- the fourth bypass (64d) is connected at the outlet of the additional absorption column (43).

10. The installation according to claim 9, comprising one or more of the following items:
- a reducing valve (5) located on the conduit (4) for withdrawing a rich absorbing solution;
- cooling means (34) and a pump (39) located on the absorbing solution supply conduit (33);
- a reducing valve (14) located on the conduit (13) for conveying a liquid from the first regenerator (11) to the second regenerator (21);
- a reducing valve (24) located on the conduit (23) for conveying a liquid from the second regenerator (21) to the third regenerator (31).

11. The installation according to any of claims 9 or 10, wherein the first regenerator (11) and/or the second regenerator (21) and/or the third regenerator (31) are provided with heating means (12, 22, 32).

12. The installation according to any of claims 9 to 11, comprising:
- cooling means (62);
- a conduit (61) for drawing off an absorbing solution, connected on the absorption column (2) and feeding the cooling means (62);
- a conduit (63) for injecting a cooled absorbing solution, connected at the outlet of the cooling means (62) and feeding the absorption column (2), and/or a flash expansion chamber (51) between the absorption column (2) and the first regenerator (11).

13. A method for producing liquefied natural gas comprising:
a step for treating natural gas containing acid gases, in accordance with the method according to any of claims 1 to 8; and
- a step for liquefying the treated natural gas.
